# EUROPÄISCHE PATENTANMELDUNG

(11) **EP 4 389 446 A1**
(43) Veröffentlichungstag der Anmeldung: **26.06.2024**
(21) Anmeldenummer: 22215667.1
(22) Anmeldetag: 21.12.2022
(51) Int. Cl.: B42D 25/346, B42D 25/355, B42D 25/455, B42D 25/46, B42D 25/47, B29C 48/15, B29C 48/16

(54) **SICHERHEITSMERKMAL FÜR DRUCKTRÄGER, MEHRSCHICHTSUBSTRAT MIT DIESEM SICHERHEITSMERKMAL, SOWIE VERFAHREN ZU DEREN HERSTELLUNG**

(71) Anmelder: Hueck Folien Gesellschaft m.b.H., 4342 Baumgartenberg (AT)
(72) Erfinder: MAYRHOFER, Marco, 4342 Baumgartenberg (AT)
(74) Vertreter: Burger, Hannes

(57) **Zusammenfassung**

Sicherheitsmerkmal (100) für Druckträger, umfassend zumindest eine Merkmalsschicht (105), die auf zumindest einer Seite einer Trägerfolie (104) aufgebracht ist und mit dieser eine zentrale Lage (101) bildet. Auf beiden Seiten der zentralen Lage (101) ist jeweils zumindest ein Kleber (102, 103) aufgetragen, wobei die Haftung eines ersten Klebers (103) zu Papierlagen (10, 20) grösser ist als die Haftung eines auf der gegenüberliegenden Seite der zentralen Lage (101) aufgetragenen zweiten Klebers (102) zum Oberflächenmaterial von Applikationswerkzeugen (110, 50).

## Beschreibung

Die Erfindung betrifft ein Sicherheitsmerkmal für Druckträger, umfassend zumindest eine Merkmalsschicht, weiters ein Mehrschichtsubstrat, das wenigstens eine erste Papierlage, wenigstens eine zweite Papierlage, sowie wenigstens eine, zwischen den Papierlagen angeordnete und mit den Papierlagen verbundene Kunststoffschicht aus wenigstens einem thermoplastischen polymeren Material, vorzugsweise Polyamid, umfasst. Das vorgeschlagene flächige Substrat kann beispielsweise als Druckträger, insbesondere als Sicherheitspapier, insbesondere als Banknote, aber auch als Verpackungsmaterial, Abdeckungsmaterial, Kartensubstrat, etc. Verwendung finden. Die Erfindung betrifft auch ein Verfahren zur Herstellung eines Mehrschichtsubstrates mit einem Sicherheitsmerkmal.

Drucksubstrate für Wertdokumente wie beispielsweise Banknoten sind einer ständigen Weiterentwicklung unterworfen, um den ebenfalls stetig wachsenden Bedürfnissen an Fälschungssicherheit entsprechen zu können. Von besonderem Interesse ist dabei, Sicherheiten zu schaffen, die im täglichen Gebrauch vom Benutzer ohne weitere technische Hilfsmittel zu erkennen sind, in ihrer Art und Weise aber nicht ohne weiteres imitiert werden können.

Im ständigen Bestreben nach weiterentwickelten Substraten für Banknoten sind neben den bekannten Sicherheitspapieren auch schon alternative Materialien, beispielsweise eine Polymerfolie, als Trägermaterial zur Anwendung gekommen. Polymerbanknoten besitzen aber neben der genannten verbesserten Dauerhaftigkeit verglichen mit herkömmlichen Papierbanknoten eine Möglichkeit zur zusätzlichen Absicherung gegen Nachahmungen, die sich mit klassischen Papiersubstraten nicht realisieren lässt. Indem das ursprünglich transparente Polymersubstrat gezielt in gewissen Bereichen nicht oder nur partiell bedruckt wird, ergeben sich transparente Bereiche - so genannte Fenster - die als wertvoller Schutz gegen einfachere und weit verbreitete Reproduktionsmethoden angesehen werden. Diese Sichtfenster werden als so genannte Erststufen-Merkmale eingestuft, welche sich definitionsgemäss vom Benutzer einfach, rasch und ohne Hilfsmittel verifizieren lassen. Auch wird mit transparenten Bereichen die Möglichkeit eröffnet, neuartige Sicherheitsmerkmale, welche für ihre Funktion auf ein transparentes Trägermaterial angewiesen sind, anzuwenden. Ein Nachteil ist jedoch das Fehlen eines charakteristischen Griffs und Klanges einer papierbasierten Banknote. Weiters sind echte Wasserzeichen in diesen Substraten nicht unterzubringen. Auch andere, etablierte, in Papiersubstraten angewandte und vom Verbraucher anerkannte Merkmale wie Melierfasern, Planchetten oder Sicherheitsfäden lassen sich in Polymer-Banknoten nicht realisieren. Ebenfalls fehlt der für papierbasierten Banknoten typische charakteristische Griff und Klang, welcher oft als deutliches Erkennungskriterium für echte Banknoten dient.

Um die Vorteile beider Banknotensubstrate zu kombinieren, sind schon Kombinationen der beiden Materialien vorgeschlagen worden. So beschreibt beispielsweise die EP 0 628 408 A1 ein Substrat, welches aus einer bedruckten Folie besteht, auf die beidseitig ein Sicherheitspapier mit Hilfe eines Adhäsivs auflaminiert ist. In der WO 2004/028825 A1 wird andererseits ein Aufbau vorgeschlagen, bei dem ein Sicherheitspapier oberflächlich mit einer Folie versehen wird. In einer möglichen Ausführungsform wird zwischen zwei Folien eine fensterartig durchbrochene Papierbahn vorgesehen. Überdies sind Polymere als Materialien des täglichen Gebrauchs einem potentiellen Fälscher in einfacher Weise für Imitationen zugänglich.

Einen wiederum anderen Ansatz verfolgt daher die WO 2004/076198 A1, welche ein Mehrschichtlaminat aus Papierlagen und Folienlagen offenbart, bei dem die Papierlagen in einer bevorzugten Ausführungsform durchgängige Aussparungen aufweisen, wodurch sich im Laminat die gewünschten Sichtfenster an beliebiger Stelle und in beliebiger Anzahl realisieren lassen. Die Verbindung von Papierlagen und Folie erfolgt in einem Laminationsprozess, bei dem explizit auf jegliche Art von Adhäsiv verzichtet wird, der allerdings gewisse wirtschaftliche und prozesstechnische Schwierigkeiten in sich birgt. Die Papierlagen werden stark entfeuchtet, neigen zur Vergilbung oder gar zur Pergamentisierung, was sich nachteilig auf die optischen und mechanischen Eigenschaften auswirkt. Als weiterer Nachteil des Prozesses ist anzusehen, dass im Fall von Durchbrechungen in den zwei Papierlagen, in welchen die Polymerfolie von einer oder beiden Seiten her frei zugänglich ist, die Polymerfolie auf dieselbe Temperatur wie der restliche Verbund erhitzt wird. Bei dieser Temperatur ist i.d.R. eine erhöhte Fliessfähigkeit des Polymers gegeben, so dass es zu ausreichendem Eindringen in die Papierlagen unter Ausbildung einer Penetrationszone kommt. Unter diesen Bedingungen hat das Polymer naturgemäss ebenfalls eine erhöhte Affinität zu den Apparateteilen (Walzen, Carrierbänder) des Laminators, welche dieselbe oder sogar eine höhere Temperatur als jene des Polymers besitzen, was zum Kleben der Polymerfolie auf den Apparateteilen und zum Abbilden etwaiger Oberflächenstrukturen führen kann.

Ein Vorschlag gemäss der WO 2006/066431 A1 sieht daher ein Mehrschichtsubstrat und ein Herstellungsverfahren dafür vor, bestehend aus wenigstens einer ersten Papierlage, wenigstens einer zweiten Papierlage, sowie wenigstens einer zwischen den Papierlagen angeordneten und mit den Papierlagen verbundenen Kunststoffschicht aus wenigstens einem thermoplastischen polymeren Material. Allenfalls weist wenigstens eine der Papierlagen durchgehende Durchbrechungen auf, welche durch die Kunststoffschicht vollumfänglich überspannt werden. Die Kunststoffschicht wird in schmelzflüssigem Zustand zwischen die Papierlagen zugeführt, die anschliessend zwischen einem Walzenpaar in einem kontinuierlichen Prozess gepresst werden, wobei eine stoffschlüssige Verbindung zwischen den Papierlagen und der Kunststoffschicht unter Ausbildung einer Penetrationszone entsteht. Es werden keine Adhäsive verwendet. Die Kunststoffschicht übernimmt eine stabilisierende und tragende Funktion und verstärkt das Mehrschichtsubstrat als Ganzes. Ein Beispiel für ein solches Kompositsubstrat wird von der Landqart AG unter dem Markenname DuraSafe ^{®} angeboten.

Um in derartige Mehrschichtsubstrate Sicherheitsmerkmale einzuarbeiten, gibt es bislang im Wesentlichen drei Alternativen.

Ein mit zwei unterschiedlichen Heisssiegellacken versehener Sicherheitsfaden, wobei eine Beschichtung für die Haftung gegen Papier, die andere Beschichtung für die Haftung gegen die Kunststoffschicht ausgelegt ist, wird während der Extrusionskaschierung zwischen Papier und Kunststoffschicht eingebracht. Dieser Prozess gestattet aber nur eine limitierte Temperatur, so dass Heisssiegellacke nicht ideal aufschmelzen bzw. deren Auswahl sehr eingeschränkt ist.

Alternativ könnte registriert oder unregistriert eine Fadenfolie als Transferelement auf eine der Papierlagen noch vor der Extrusion des Kunststoffmaterials appliziert werden. Druck- und/oder hitzesensitive Sicherheitsmerkmale werden bei der nachfolgenden Extrusionskaschierung zerstört, da keine stabilisierende Folie mehr vorhanden ist. Eine weitere Alternative sieht, wieder entweder registriert oder unregistriert, eine stabilisierende Folie vor, die am Streifen verbleibt. Dazu wird ein nicht transferierbares Sicherheitsmerkmal vorab auf eine Papierlage appliziert und dann dieses Papier für die Extrusionskaschierung zur Herstellung des Mehrschichtsubstrates verwendet. Die Trägerfolie zeigt aber keine Haftung zur Kunststoffschicht und kann relativ leicht aus dem Papier entfernt werden.

Aufgabe der vorliegenden Erfindung war es, die Nachteile des Standes der Technik zu überwinden und ein Sicherheitsmerkmal, ein dieses umfassendes Mehrschichtsubstrat sowie ein Verfahren zur Herstellung des Mehrschichtverbundes zur Verfügung zu stellen, um vorzugsweise registergenau ein Sicherheitsmerkmal mit optimaler Fixierung im Verbund zu integrieren.

Diese Aufgabe wird durch ein Produkt und ein Verfahren gemäß den Ansprüchen gelöst.

Das erfindungsgemäße Sicherheitsmerkmal ist dadurch gekennzeichnet, dass zumindest eine Merkmalsschicht auf zumindest einer Seite einer Trägerfolie aufgebracht ist und mit dieser eine zentrale Lage bildet, und dass auf beiden Seiten der zentralen Lage jeweils zumindest ein Kleber aufgetragen ist, wobei die Haftung des erster Klebers zu Papierlagen grösser ist als die Haftung eines auf der gegenüberliegenden Seite der zentralen Lage aufgetragenen zweiten Klebers zum Oberflächenmaterial von Applikationswerkzeugen. Damit kann bei der Applikation des Sicherheitsmerkmals auf das Papier mit hoher Temperatur bzw. hohem Energieeintrag gearbeitet und derart eine optimale Klebeverbindung von Sicherheitsmerkmal und Papier erzielt werden.

Die Merkmalsschicht kann dabei Reliefstrukturen aufweisen, mit achromatischen und/oder reflektierenden und/oder refraktiven und/oder diffraktiven und/oder Mikrospiegel und/oder zumindest ein Hologramm bildenden und/oder Mikrolinsen bildenden Strukturen. Es kann aber auch zumindest partiell gedruckte Farbe verwendet werden oder farbkippende Schichten, insbesondere farbkippende Dünnfilmaufbauten. Auch die Verwendung von partiell oder vollflächig metallisierten Schichten ist möglich.

Insbesondere kommen hier Heiss- oder Kaltsiegelkleber oder Selbstklebebeschichtungen zum Einsatz, bei welchen die Glasübergangstemperatur und/oder der Schmelzpunkt unter der jeweils vorgesehenen Verarbeitungstemperatur liegt. Die können beispielsweise PVC, Acrylate, Styrole oder Polyurethane sein. Die Oberflächen der Applikationswerkzeuge bestehen typischerweise aus metallischen Werkstoffen, insbesondere Chrom oder Stahl, beispielsweise verchromte Stahlwalzen, oder haben keramische Beschichtungen oder Antihaftbeschichtungen, insbesondere aus Teflon oder Polyamid, wobei alle Materialien hohe Temperaturbeständigkeit aufweisen müssen.

Bevorzugt ist eine Ausführungsform, bei welcher die Haftung des zweiten Klebers zur zentralen Lage und zu thermoplastischem polymerem Material, insbesondere den Kunststoffschichten, grösser ist als zum Oberflächenmaterial von Applikationswerkzeugen, die allenfalls mit Antihaftbeschichtungen versehen sein können. Diese Ausführungsform hat den Vorteil der für beide Komponenten eines Mehrschichtverbundes optimalen Auslegung betreffend den Kleber und ermöglicht auch die optimal auf die Materialien abgestimmte Applikation bzw. Extrusionskaschierung aller Schichten eines Mehrschichtverbundes, insbesondere im Zuge eines zweistufigen Prozesses mit separaten Schritten für die Applikation des Sicherheitsmerkmal auf Papier und die Verbindung mit einer Kunststoffschicht auf der gegenüberliegenden Seite.

Vor besonderer Bedeutung ist dabei, dass die Kleber auf den gegenüberliegenden Seiten der zentralen Lage des Sicherheitsmerkmals nicht zueinander verblocken. Der Kleber auf der Seite der Kunststoffschicht weist bevorzugt eine geringere Haftung zu Applikationswerkzeugen auf, insbesondere Werkzeugen für das Aufsiegeln des Sicherheitsmerkmals auf eine Papierschicht, als die Haftung des Sicherheitsmerkmals an Papierschichten ist und/oder auch geringer als die innere Haftung der Bestandteile des Sicherheitsmerkmals selbst ist/sind.

Gemäss einem weiteren Merkmal der Erfindung ist unmittelbar unterhalb zumindest eines der Kleber, vorzugsweise unterhalb beider Kleber, zumindest je eine Grundierung aufgebracht.

Eine weitere erfindungsgemässe Ausführungsform für ein Sicherheitsmerkmal sieht vor, dass auf der dem ersten Kleber gegenüberliegenden Seite der zentralen Lage ein gegen das thermoplastische Material siegelnder Heisssiegellack aufgetragen ist, dessen Haftung zu thermoplastischem Material grösser ist als zum Oberflächenmaterial von Applikationswerkzeugen.

Eine weitere Ausführungsform eines erfindungsgemässen Sicherheitsmerkmals ist dadurch gekennzeichnet, dass es Ausstanzungen aufweist, vorzugsweise in Form von Löchern mit geschlossener Kontur. Damit lässt sich eine noch bessere Haftung zwischen dem Sicherheitsmerkmal und der angrenzenden Schicht erreichen. Insbesondere kann das thermoplastische polymere Material durch die Ausstanzungen mit der gegenüberliegenden Papierlage eine Verbindung eingehen und derart den Zusammenhalt des Mehrschichtsubstrates verbessern.

Ein weiterer Erfindungsgegenstand ist ein Mehrschichtsubstrat, umfassend wenigstens eine erste Papierlage, wenigstens eine zweite Papierlage, sowie wenigstens eine, zwischen den Papierlagen angeordnete und mit den Papierlagen verbundene Kunststoffschicht aus wenigstens einem thermoplastischen polymeren Material, sowie zumindest ein zwischen den Papierlagen angeordnetes Sicherheitsmerkmal.

Zur Lösung der eingangs gestellten Aufgabe ist ein derartiges Mehrschichtsubstrat durch ein Sicherheitsmerkmal gekennzeichnet, das gemäss einem der vorhergehenden Absätze aufgebaut ist. Dieses bietet den Vorteil, dass das Sicherheitsmerkmal sowohl gegenüber dem Papier als auch der Kunststoffschicht optimal im Verbund verankert ist und bei der Herstellung eine Auftrennung in zumindest einen optimal auf die Applikation des Sicherheitsmerkmals auf einer Papierschicht und getrennt davon optimal auf die Verbindung des Sicherheitsmerkmals mit der Kunststoffschicht möglich ist.

Eine vorteilhafte Materialwahl für ein erfindungsgemässes Mehrschichtsubstrat sieht vor, dass es sich beim thermoplastischen polymeren Material der Kunststoffschicht um Polyethylen (PE), Polypropylen (PP), Polyvinylchlorid (PVC), weichPVC (PVC-P), Polystyrol (PS), Polycarbonat (PC), Polymethylmethacrylat (PMMA), Polyoxymethylen (POM), Polyethylenterephthalat (PET), Polyester, co-Polyester, Polyetheretherketon (PEEK), Polyamid, insbesondere Polyamid 6 (P A6) oder Polyamid 12 (PAl 2), oder amorphes Co-Polyamid, bevorzugt auf Basis von PA12, oder um Copolymere oder Blends daraus handelt.

Weiters ist es gemäss der Erfindung eine bevorzugte Ausführungsform, dass wenigstens eine, bevorzugt beide Papierlagen im Mittel gleich dick oder bevorzugtermassen dicker sind als die Kunststofflage.

Die bevorzugten Anwendungen für derartige Mehrschichtsubstrate wie oben beschrieben sind insbesondere Sicherheitspapiere oder Banknoten oder als Verpackungsmaterial, Abdeckungsmaterial oder Kartensubstrat.

Zur Lösung der gestellten Aufgabe ist erfindungsgemäss das Verfahren zur Herstellung eines Mehrschichtsubstrates mit wenigstens einer ersten Papierlage, wenigstens einer zweiten Papierlage, sowie wenigstens einer, zwischen den Papierlagen angeordneten und mit den Papierlagen verbundenen Kunststoffschicht aus wenigstens einem thermoplastischen polymeren Material, sowie mit zumindest einem integriertem Sicherheitsmerkmal, dadurch gekennzeichnet, dass zumindest ein Sicherheitsmerkmal mit einem zumindest einseitig aufgetragenen Papierkleber vor der Zuführung der Kunststoffschicht auf zumindest eine Papierlage appliziert und der Papierkleber aktiviert wird.

Die erfindungsgemässe Applikation in diesem zweistufigen Prozess der dargestellten Abfolge - Schritt 1: Applikation gegen Papier und Aktivierung des Papierklebers; Schritt 2: Extrusionskaschierung mit Aktivierung des Klebers für das thermoplastische polymere Material und Verbindung mit dem extrudierten thermoplastischen polymeren Material - erlaubt eine registergenaue, entfernungssichere Integration eines Sicherheitsmerkmales in ein Mehrschichtsubstrat. Durch die vor der Extrusionskaschierung stattfindenden Applikation des Sicherheitsmerkmals kann dabei so heiss gearbeitet werden, dass eine optimale Haftung des Sicherheitsmerkmals zum Papier erreicht wird, ohne aber die - nachfolgende - Verbindung des thermoplastischen Materials mit der anderen Papierlage nachteilig zu beeinflussen.

Bevorzugt wird dabei zumindest ein Sicherheitsmerkmal mit einem einseitig aufgetragenen Papierkleber und einem auf der gegenüberliegenden Seite aufgetragenen zweiten Kunststoffkleber vor der Zuführung der Kunststoffschicht auf zumindest eine Papierlage appliziert und der Papierkleber aktiviert. Anschliessend wird der Kunststoffkleber aktiviert und mit der Kunststoffschicht verbunden.

Bevorzugt wird die Kunststoffschicht mit einem Flächengewicht von 22-80g/m², vorzugsweise 25-40 g/m², aufgetragen.

Gemäss einer weiteren erfindungsgemässen Ausführungsform ist vorgesehen, dass das thermoplastische polymere Material der Kunststoffschicht bei einer Schmelzetemperatur, bevorzugt gemessen unmittelbar bei Austritt, im Bereich von 250-350 °C zugeführt wird.

Eine weitere Ausführungsform ist dadurch gekennzeichnet, dass das Walzenpaar auf einer Temperatur oberhalb der Raumtemperatur aber unterhalb der Temperatur der zugeführten Schmelze der für die Kunststoffschicht verwendeten Materialien gehalten wird.

Bevorzugt ist dabei die Siegeltemperatur beim Aufbringen des Sicherheitsmerkmals auf die Papierlage höher als die Glasübergangstemperatur des verwendeten Klebers für Papier und die Temperatur der "Extrusionsverklebung" muss höher sein als die Glasübergangstemperatur der Kleber für die polymere Extrusionskleberbeschichtung

Dazu ist es bevorzugt, dass das Walzenpaar auf einer Temperatur oberhalb der Raumtemperatur aber unterhalb der Schmelztemperatur resp. unterhalb des Glasübergangspunktes der für die Kunststoffschicht verwendeten Materialien gehalten wird.

Eine weitere Ausführungsform der Erfindung sieht ein Verfahren vor, bei welchem wenigstens die Papierlage mit dem applizierten Sicherheitsmerkmal, bevorzugt beide Papierlagen, im Wesentlichen unmittelbar vor der Zuführung der Kunststoffschicht erwärmt werden, bevorzugt auf der der Kunststoffschicht zugewandten Seite.

Bevorzugt wird das Material der Kunststoffschicht als Präpolymer, als Polymerdispersion oder als Polymerlösung zugeführt, welche während oder im Anschluss an die Verbindung mit den Papierlagen chemisch oder physikalisch aushärtet oder/und ausreagiert oder/und trocknet und/oder geliert.

Die Erfindung soll nachfolgend anhand von Ausführungsbeispielen im Zusammenhang mit den Zeichnungen näher erläutert werden.

Es zeigen jeweils in stark vereinfachter, schematischer Darstellung:
- Fig. 1: Eine schematische Draufsicht auf einen Druckträger aus dem erfindungsgemässen Mehrschichtsubstrat mit Sicherheitsmerkmal.
- Fig. 2: Einen schematischen Querschnitt durch das Mehrschichtsubstrat der Fig. 1 entlang der Linie I-I.
- Fig. 3: Einen schematischen Querschnitt durch das Mehrschichtsubstrat der Fig. 1 entlang der Linie II-II.
- Fig. 4: Einen schematischen Querschnitt durch einen Abschnitt einer beispielhaften Ausführungsform eines erfindungsgemässen Sicherheitsmerkmals für ein erfindungsgemässes Mehrschichtsubstrat, beispielsweise der Fig. 1 bis 3.
- Fig. 5: Eine schematische Darstellung des wesentlichen Abschnittes einer Anlage zur Herstellung eines erfindungsgemässen Mehrschichtsubstrates.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

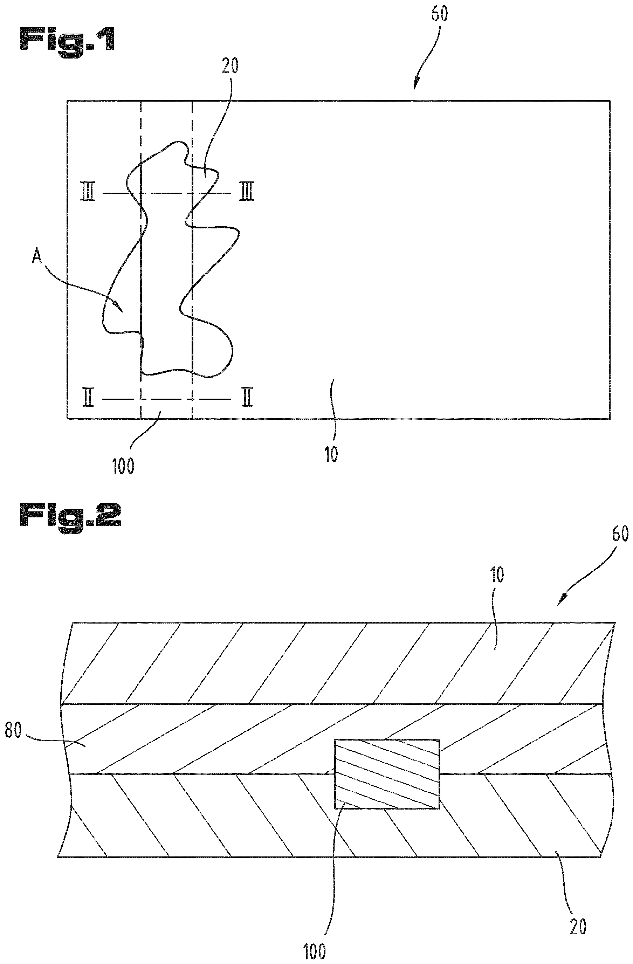

In der Fig. 1 ist eine schematische Draufsicht auf einen Druckträger D aus einem Mehrschichtsubstrat 60 dargestellt, wie er beispielsweise für Sicherheitspapiere oder Banknoten oder als Verpackungsmaterial, Abdeckungsmaterial oder Kartensubstrat verwendet wird. Dabei können durch eine Ausnehmung A in einer der äusseren Papierlagen 10 das integrierte Sicherheitsmerkmal 100 und allenfalls auch die innere Oberfläche der gegenüberliegenden Papierlage 20 sichtbar sein.

Fig. 2 zeigt einen ersten Längsschnitt durch ein Mehrschichtsubstrat 60, wie es beispielsweise für Druckträger D wie in Fig. 1 zum Einsatz kommt, in Höhe der Linie I-I der Fig. 1, in schematischer Darstellung.

Das Mehrschichtsubstrat 60 basiert auf einer ersten Papierlage 10 und einer zweiten Papierlage 20 mit einer dazwischen angeordneten Kunststoffschicht 80, insbesondere einem Polymer. Eine schematische Schnittansicht eines derartigen Aufbaus ist in Fig. 2 dargestellt. Bevorzugte Materialien für die Kunststoffschicht 80 sind insbesondere Polymere aus der Klasse der Polyamide. Diese besitzen auf Grund ihrer chemischen Struktur eine besonders hohe Affinität zu Papier und sind durch ihre hohe chemische Beständigkeit gegenüber Säuren, Basen, Lösungsmitteln, Bleichmitteln etc., hohe thermische Beständigkeit, hohe UV-Beständigkeit, hohe Transparenz, hohe Biegewechselfestigkeit und hohe Erweichungstemperatur bestens geeignet. Zwischen der vorzugsweise durch Extrusionsbeschichtung auf eine der Papierlagen 10, 20 aufgebrachte Kunststoffschicht 80 und der jeweiligen Papierlage 10, 20 ist ein Sicherheitselement 100 eingelegt, welches teilweise in die Papierlage 10, 20 gepresst wird und welches teilweise in die Extrusionskaschierung ragt.

Ein Mehrschichtsubstrat 60 aus diesen bevorzugten Materialien mit Papier 10, 20 zeichnet sich daher durch einen besonders innigen Verbund aus, der von einem guten Stoffschluss einerseits und von einer guten Kompatibilität der einzelnen Komponenten andererseits herrührt. Der innige Stoffschluss kann ggf. eine Folge von guter Benetzbarkeit der Papierfasern mit der verwendeten Polymerschmelze sein. Besonders bevorzugt ist Polyamid 6, Polyamid 12, teilkristallines Co-Polyamid L25, Ems, teilkristallines Co-Polyamid Ll 6, Ems, amorphes Co-Polyamid G21, oder amorphes Co-Polyamid TR90.

Eine weitere Polymerklasse, die sich durch gute Benetzbarkeit auszeichnet, und ebenfalls Verbünde mit innigem Stoffschluss ergeben, sind die Polyester. Eine vorteilhafte Materialwahl für ein erfindungsgemässes Mehrschichtsubstrat kann weiters Polyethylen (PE), Polypropylen (PP), Polyvinylchlorid (PVC), weichPVC (PVC-P), Polystyrol (PS), Polycarbonat (PC), Polymethylmethacrylat (PMMA), Polyoxymethylen (POM), Polyethylenterephthalat (PET), Polyester, co-Polyester, Polyetheretherketon (PEEK), Polyamid, insbesondere Polyamid 6 (P A6) oder Polyamid 12 (PAl 2), oder amorphes Co-Polyamid, bevorzugt auf Basis von PA12, oder Copolymere oder Blends daraus umfassen.

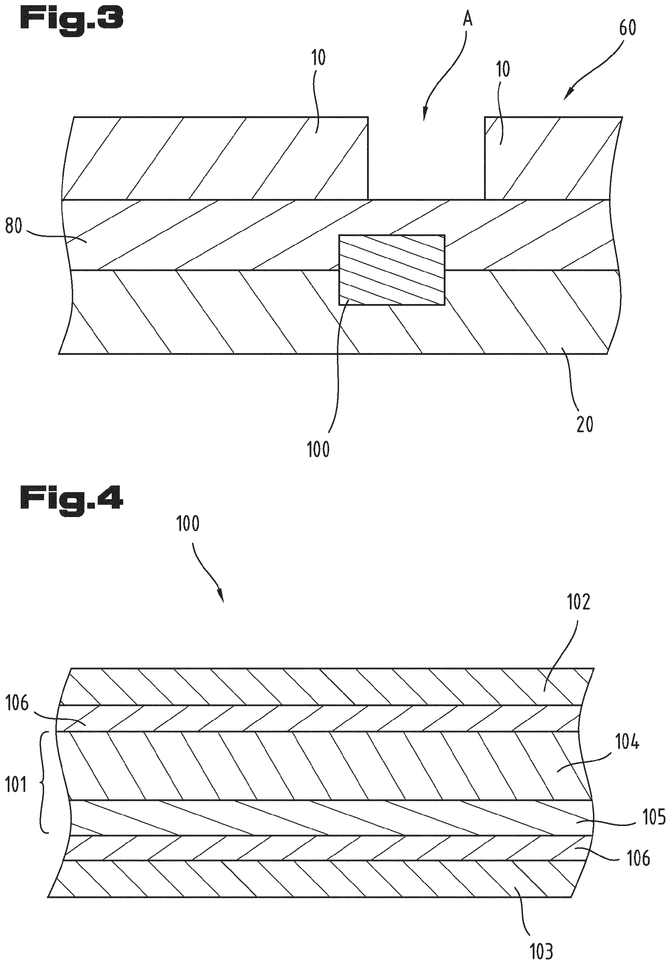

Fig. 3 zeigt eine schematische Darstellung eines Schnittes entsprechend Fig. 2, jedoch an einer Stelle, an welcher ein der Papierlagen 10, 20, hier die Papierlage 10, mit einer Ausnehmung A versehen ist. Durch diese Ausnehmung A ist die zentrale Kunststoffschicht 80 und das zwischen dieser und der unteren Papierlage 20 eingebettete Sicherheitsmerkmal 100 sichtbar.

Das Sicherheitsmerkmal 100 ist vorzugsweise ein optisches Sicherheitsmerkmal und ist beispielhaft wie in Fig. 4 in einem schematischen Schnitt dargestellt aufgebaut. Bevorzugt weist das Sicherheitsmerkmal 100 eine zentralen Lage 101 auf, die sich aus zumindest einer Trägerfolie 104 sowie zumindest auf einer beliebigen Seite dieser Trägerfolie 104 oder auch auf beiden Seiten davon aufgebrachte oder darin ausgebildete Merkmalsschicht 105 zusammensetzt. Die Merkmalsschicht 105 umfasst zumindest eine Schicht, allenfalls auch mehrere Schichten, mit Sicherheitsstrukturen wie achromatische und/oder reflektierende und/oder refraktive und/oder diffraktive und/oder Mikrospiegel und/oder zumindest ein Hologramm bildende und/oder Mikrolinsen bildende Strukturen. Besonders bevorzugt sind die Strukturen jedoch als diffraktive Strukturen ausgebildet. Die Merkmalsschicht 105 kann aber auch zumindest partiell gedruckte Farbe verwenden, oder farbkippende Schichten, insbesondere farbkippende Dünnfilmaufbauten.

Auf beiden Seiten der zentralen Lage 101 des Sicherheitsmerkmals 100 sind Kleber 102, 103 aufgebracht. Dabei hat der Kleber 102, der in Richtung der Kunststoffschicht 80 angewandt wird, eine gute Haftung zum Material dieser Schicht, jedoch zeigt der Kleber schlechtere oder keine Haftung zu den in bekannter Weise aufgebauten Applikationswerkzeugen für das Sicherheitsmerkmal 100. Diese Haftung kann auch durch eine Anti-Haftbeschichtung des Sicherheitsmerkmals 100 weiter verringert werden. Hier könnten beispielsweise sogenannte "Abstandshalter" zum Einsatz kommen, d.h. beispielsweise andere Polymere, die sich nicht in der Dispersion lösen und somit aus der glatten Lackierung herausragen, und welche nachfolgend Aufschmelzen oder in die Papierlage gedrückt wer-den.

Das Walzenpaar 110 bzw. alle mit dem Sicherheitsmerkmal 100 in Kontakt kommenden Teile der Applikationswerkzeuge können dabei ebenfalls mit oder auch ohne anti-adhäsive Beschichtung vorliegen.

Unter dem Kleber 102 kann, wie in der detaillierten schematischen Schnittansicht der Fig. 4 zu sehen ist, gegebenenfalls eine Grundierung 106 eingebracht sein. Die Mittellage 101 des Sicherheitsmerkmals 100 umfasst die Trägerfolie 104, beispielsweise eine Prägelackschicht mit Metallisierung, für die Merkmalsschicht(en) 105 mit den Strukturen, die dem vorzugsweise optischen Sicherheitsmerkmal 100 seine speziellen Eigenschaften verleihen. Auf der dem Kleber 102 gegenüberliegenden Seite der Mittellage 101 kann ebenfalls eine Grundierung 106 vorgesehen sein. Dann folgt noch ein Kleber 103 für Papier.

Eine besonders vorteilhafte Materialwahl für die Kleber 102, 103 besteht darin, für beide Kleber gleichartige Basiskomponenten zu verwenden, dem Kleber 102, der auf der Seite der Kunststoffschicht 80 angewendet wird, zusätzliche bekannte Haftverstärker für Kunststoffmaterialien beizumischen.

Besonders vorteilhaft ist eine Abstimmung der beiden Kleber 102, 103 auf beiden Seiten des Sicherheitsmerkmals 100 derart, dass deren Haftung insbesondere bei Umgebungstemperaturen bis ca. 50°C zueinander so gering als möglich ist, um ein Verblocken bei gerolltem Sicherheitsmerkmal 100 zu vermeiden. Die Kleber 102, 103 können dazu auch spezielle Antihaftbestandteile beinhalten.

Bei der Herstellung eines erfindungsgemässen Mehrschichtsubstrates 60 wird das Polymer für die Kunststoffschicht 80 bereits in schmelzflüssiger Form als Polymerschmelze 30 eingetragen wird.

Die vorliegende Erfindung betrifft demzufolge einen Prozess, bei dem Technologien aus der Flachfolienextrusion auf eine Beschichtungsanwendung übertragen werden, wodurch sich erstmals ein mehrschichtiger Verbund herstellen lässt, der aus Papierlagen (wenigstens eine davon aus Sicherheitspapier) besteht, die z.B. auch über durchgehende Durchbrechungen verfügen können, welche ohne Verwendung einer vorgefertigten Folie mit einer folienartigen Polymerlage vollständig überspannt werden.

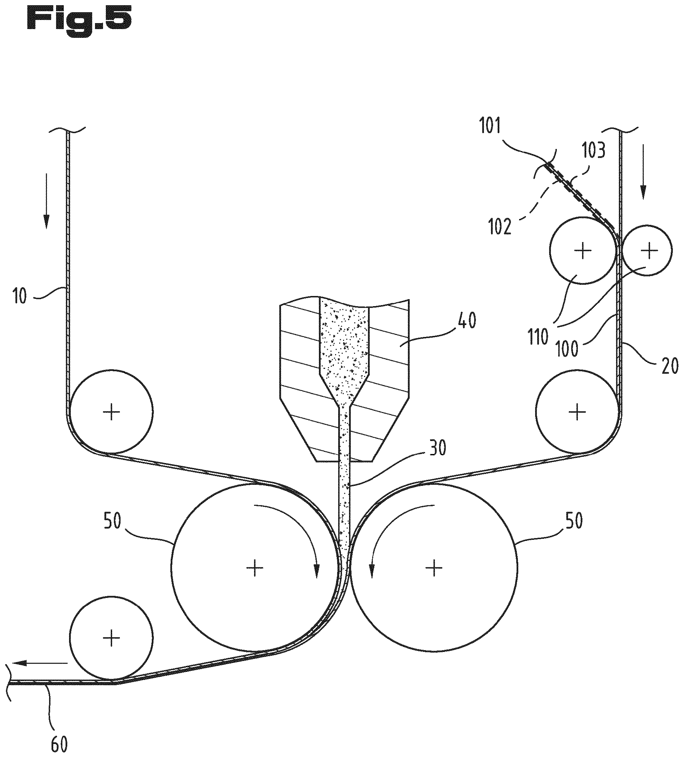

Wie in Fig. 5 schematisch dargestellt ist, wird Polymergranulat in einem Extruder aufgeschmolzen und gefördert und durch eine Breitschlitzdüse 40 direkt in der schmelzflüssigen Phase als Polymerschmelze 30 auf respektive zwischen die zum Beispiel ab Rolle zugeführten Papierlagen 10, 20 aufextrudiert. Der Begriff der schmelzflüssigen Phase bedeutet in dem Zusammenhang eine Zustandsform des Polymeren, die durch eine erhöhte Verformbarkeit respektive eine verminderte Viskosität charakterisiert ist. Die Papierlagen 10, 20 und die Polymerschmelze 30 werden von einer Anordnung von zumindest einem Walzenpaar 50 zusammenkaschiert wobei vorzugsweise hochglanzpolierte, temperierbare Stahlwalzen bzw. Walzen mit anti-adhäsiver Oberflächenbeschichtung gewählt werden. Damit ist das erfindungsgemässe dünne, wenig voluminöse Mehrschichtsubstrat 60 gut herstellbar.

Das Sicherheitsmerkmal 100 kann bei speziellen Anwendungen zusammen mit einer Trägerfolie 104 einen Kaschierverbund bilden, der mittels eines beispielsweise als Walzenpaar 110 ausgeführten Applikationswerkzeuges an eine der Papierlagen 10 angepresst wird, bevor diese Papierlage 10 in den Bereich zwischen Breitschlitzdüse 40 und Walzenpaar 50 zugeführt wird.

Die Walzen 110 können dabei mit oder auch ohne anti-adhäsive Beschichtung vorliegen. Der Kleber 103 auf der dem Papier 10 zugewandten Seite des Sicherheitsmerkmals 100 vermittelt die Haftwirkung des Sicherheitsmerkmals 100 am Papier 10. Prinzipiell wäre es möglich, die Trägerfolie 104 mit dem Sicherheitsmerkmal 100 mit der Papierlage 10 zu verbinden und den Kleber 102 für die Kunststoffschicht 80 auf der Trägerfolie 104 aufzubringen, obwohl dies natürlich die Dicke des Mehrschichtsubstrates 60 vergrössern würde und auch mechanisch nicht optimal wäre.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

10 Erste Papierlage
20 Zweite Papierlage
30 Polymerschmelze
40 Breitschlitzdüse
50 Walzenpaar
60 Mehrschichtsubstrat
70 Abplattung
80 Polymerschicht
90 Penetrationszone
100 Sicherheitsmerkmal
101 zentrale Lage
102 Kleber für Polymer
103 Kleber für Papier
104 Trägerfolie
105 Merkmalsschicht
106 Grundierung
110 Applikationswalzen

## Patentansprüche

1. Sicherheitsmerkmal (100) für Druckträger, insbesondere für Sicherheitspapiere, Banknoten, Verpackungsmaterial, Abdeckungsmaterial oder Kartensubstrat, umfassend zumindest eine Merkmalsschicht (105), **dadurch gekennzeichnet, dass** zumindest eine Merkmalsschicht (105) auf zumindest einer Seite einer Trägerfolie (104) aufgebracht ist und mit dieser eine zentrale Lage (101) bildet, und dass auf beiden Seiten der zentralen Lage (101) jeweils zumindest ein Kleber (102, 103) aufgetragen ist, wobei die Haftung eines ersten Klebers (103) zu Papierlagen (10, 20) grösser ist als die Haftung eines auf der gegenüberliegenden Seite der zentralen Lage (101) aufgetragenen zweiten Klebers (102) zum Oberflächenmaterial von Applikationswerkzeugen (110, 50).

2. Sicherheitsmerkmal (100) nach Anspruch 1, **dadurch gekennzeichnet, dass** die Haftung des zweiten Klebers (102) zur zentralen Lage (101) und zu thermoplastischem polymerem Material, insbesondere den Kunststoffschichten (80), grösser ist als zum Oberflächenmaterial von Applikationswerkzeugen (110, 50).

3. Sicherheitsmerkmal (100) nach Anspruch 1 oder 2, **dadurch gekennzeichnet, dass** unmittelbar unterhalb zumindest eines der Kleber (102, 103), vorzugsweise unterhalb beider Kleber (102, 103), zumindest je eine Grundierung (106) aufgebracht ist.

4. Sicherheitsmerkmal nach einem der Ansprüche 1 bis 3, **dadurch gekennzeichnet, dass** auf der dem ersten Kleber (103) gegenüberliegenden Seite der zentralen Lage (101) ein gegen das thermoplastische Material siegelnder Heisssiegellack aufgetragen ist, dessen Haftung zu thermoplastischem Material grösser ist als zum Oberflächenmaterial von Applikationswerkzeugen (110, 50).

5. Sicherheitsmerkmal (100) nach einem der Ansprüche 1 bis 4, **dadurch gekennzeichnet, dass** es Ausstanzungen aufweist, vorzugsweise in Form von Löchern mit geschlossener Kontur.

6. Mehrschichtsubstrat (60), umfassend wenigstens eine erste Papierlage (10), wenigstens eine zweite Papierlage (20), sowie wenigstens eine, zwischen den Papierlagen (10, 20) angeordnete und mit den Papierlagen verbundene Kunststoffschicht (80) aus wenigstens einem thermoplastischen polymeren Material, sowie zumindest ein zwischen den Papierlagen (10, 20) angeordnetes Sicherheitsmerkmal (100), **dadurch gekennzeichnet, dass** das Sicherheitsmerkmal (100) gemäss einem der Ansprüche 1 bis 5 aufgebaut ist.

7. Mehrschichtsubstrat (60) nach Anspruch 6, **dadurch gekennzeichnet, dass** es sich beim thermoplastischen polymeren Material der Kunststoffschicht (80) um Polyethylen (PE), Polypropylen (PP), Polyvinylchlorid (PVC), weichPVC (PVC-P), Polystyrol (PS), Polycarbonat (PC), Polymethylmethacrylat (PMMA), Polyoxymethylen (POM), Polyethylenterephthalat (PET), Polyester, co-Polyester, Polyetheretherketon (PEEK), Polyamid, insbesondere Polyamid 6 (P A6) oder Polyamid 12 (PAl 2), oder amorphes Co-Polyamid, bevorzugt auf Basis von PA12, oder um Copolymere oder Blends daraus handelt.

8. Mehrschichtsubstrat (60) nach einem der Ansprüche 1 bis 7, **dadurch gekennzeichnet, dass** wenigstens eine, bevorzugt beide Papierlagen (10, 20) im Mittel gleich dick oder bevorzugtermassen dicker sind als die Kunststoffschicht (80).

9. Mehrschichtsubstrat (60) gemäss einem der Ansprüche 6 bis 8 als Druckträger, insbesondere als Sicherheitspapier oder Banknote oder als Verpackungsmaterial, Abdeckungsmaterial oder Kartensubstrat.

10. Verfahren zur Herstellung eines Mehrschichtsubstrates (60) mit wenigstens einer ersten Papierlage (10), wenigstens einer zweiten Papierlage (20), sowie wenigstens einer, zwischen den Papierlagen (10, 20) angeordneten und mit den Papierlagen verbundenen Kunststoffschicht (80) aus wenigstens einem thermoplastischen polymeren Material, sowie mit zumindest einem integriertem Sicherheitsmerkmal (100), umfassend die Zuführung der wenigstens einen Kunststoffschicht in schmelzflüssigem Zustand (30) zwischen die Papierlagen (10, 20), anschliessendes kontinuierliches Pressen der Papierlagen (10, 20) zwischen zumindest einem Walzenpaar (50), vorzugsweise mit anti-adhäsiver Oberfläche, wobei eine stoffschlüssige Verbindung zwischen den Papierlagen (10, 20) und der zumindest einen Kunststoffschicht (80) unter Ausbildung einer Penetrationszone (90) hergestellt wird, in welcher Teile der Kunststoffschicht (80) mit der Masse des Faserverbundes der Papierlagen (10, 20) verbunden sind, **dadurch gekennzeichnet, dass** zumindest ein Sicherheitsmerkmal (100) mit einem zumindest einseitig aufgetragenen Papierkleber (103) vor der Zuführung der Kunststoffschicht auf zumindest eine Papierlage (10) appliziert und der Papierkleber (103) aktiviert wird.

11. Verfahren nach Anspruch 10, **dadurch gekennzeichnet, dass** anschliessend an die Applizierung des Sicherheitsmerkmals (100) auf zumindest eine Papierlage (10) der Kunststoffkleber (102) aktiviert und mit der Kunststoffschicht (80) verbunden wird.

12. Verfahren nach Anspruch 10 oder 11, **dadurch gekennzeichnet, dass** die Kunststoffschicht (80) mit einem Flächengewicht von 22-80g/m2, vorzugsweise 25-40 g/m2, aufgetragen wird.

13. Verfahren nach einem der Ansprüche 10 bis 12, **dadurch gekennzeichnet, dass** das thermoplastische polymere Material der Kunststoffschicht (80) bei einer Schmelzetemperatur, bevorzugt gemessen unmittelbar bei Austritt, im Bereich von 250-350 °C zugeführt wird.

14. Verfahren nach einem der Ansprüche 10 bis 13, **dadurch gekennzeichnet, dass** das Walzenpaar auf einer Temperatur oberhalb der Raumtemperatur aber unterhalb der Temperatur der zugeführten Schmelze der für die Kunststoffschicht verwendeten Materialien gehalten wird.

15. Verfahren nach Anspruch 14, **dadurch gekennzeichnet, dass** das Walzenpaar auf einer Temperatur oberhalb der Raumtemperatur aber unterhalb der Schmelztemperatur respektive unterhalb des Glasübergangspunktes der für die Kunststoffschicht verwendeten Materialien gehalten wird.

16. Verfahren nach einem der Ansprüche 10 bis 15, **dadurch gekennzeichnet, dass** wenigstens die Papierlage (10) mit dem applizierten Sicherheitsmerkmal (100), bevorzugt beide Papierlagen (10, 20) im Wesentlichen unmittelbar vor der Zuführung der Kunststoffschicht in schmelzflüssigem Zustand (30) erwärmt werden, bevorzugt auf der der Kunststoffschicht zugewandten Seite.

17. Verfahren nach einem der Ansprüche 10 bis 16, **dadurch gekennzeichnet, dass** das Material der Kunststoffschicht (80) als Präpolymer, als Polymerdispersion oder als Polymerlösung, welche während oder im Anschluss an die Verbindung mit den Papierlagen (10, 20) chemisch oder physikalisch aushärtet oder/und ausreagiert oder/und trocknet und/oder geliert, zugeführt wird.
